# NEUE EUROPÄISCHE PATENTSCHRIFT

(11) **EP 2 320 248 B2**
(45) Veröffentlichungstag und Bekanntmachung des Hinweises auf die Entscheidung über den Einspruch: **02.01.2019**
(45) Hinweis auf die Patenterteilung: 13.01.2016
(21) Anmeldenummer: 10013904.7
(22) Anmeldetag: 23.10.2010
(51) Int. Cl.: G01S 17/42, G01S 17/87, G01S 17/93, G01S 13/93

(54) **Verfahren zum Erfassen eines Objekts in einem Totwinkelbereich eines Fahrzeugs und Fahrerassistenzsystem zur Erfassung eines Objekts in einem Totwinkelbereich eines Fahrzeugs**
Method for detecting an object in the blind spot of a vehicle and driver assistance system for detecting an object in the blind spot of a vehicle
Procédé de détection d'un objet dans un angle mort d'un véhicule et système d'assistance au conducteur pour la détection d'un objet dans un angle mort d'un véhicule

(30) Priorität: 10.11.2009 DE 102009052591
(43) Veröffentlichungstag der Anmeldung: 11.05.2011
(73) Patentinhaber: Valeo Schalter und Sensoren GmbH, 74321 Bietigheim-Bissingen (DE)
(72) Erfinder: Charpentier, Adrien, 70180 Stuttgart (DE)

(56) Entgegenhaltungen:
- EP-A1- 0 658 776
- WO-A1-2006/035019
- US-A1- 2006 220 945
- US-B1- 6 363 326
- US-B1- 6 452 534

## Beschreibung

Die Erfindung betrifft ein Verfahren zum Erfassen eines Objekts in einem Totwinkelbereich eines Fahrzeugs, bei welchem mit einer Sensoreinheit eine Mehrzahl von Detektionssignalen eines Signalpakets ausgesendet und an dem Objekt reflektierte und von einer Empfangseinheit empfangene Signale ausgewertet werden. Des Weiteren betrifft die Erfindung ein Fahrerassistenzsystem zum Erfassen eines Objekts in einem Totwinkelbereich eines Fahrzeugs.

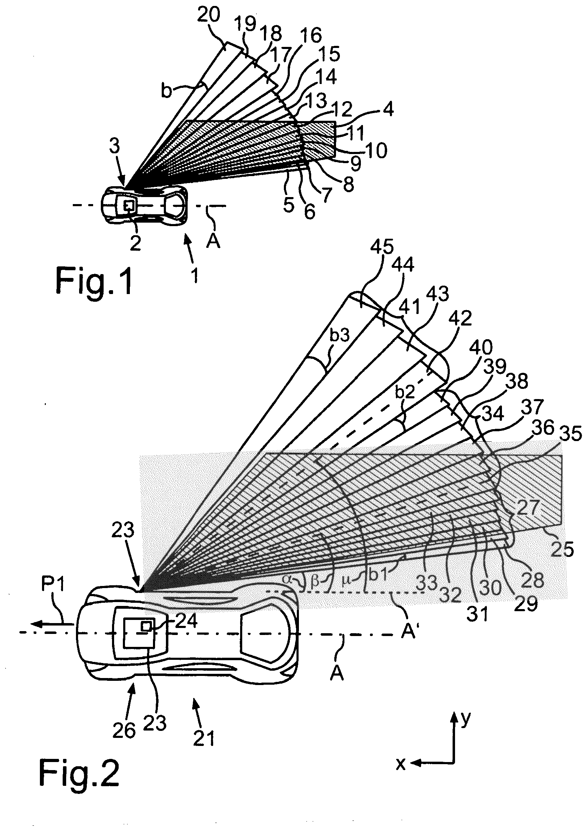

Aus dem Stand der Technik sind Systeme für ein Fahrzeug bekannt, mittels denen Objekte in einem Totwinkelbereich des Fahrzeugs erfassbar sind. So zeigt diesbezüglich beispielsweise Fig. 1 ein Fahrzeug 1, welches eine Längsachse A aufweist. Das Fahrzeug 1 umfasst ein Fahrerassistenzsystem 2, welches eine Sensoreinrichtung 3 aufweist. Die Sensoreinheit 3 ist als Sensor-Array ausgebildet und umfasst eine Mehrzahl von einzelnen Infrarotsensoren. Die Sensoreinheit 3 ist derartig am Fahrzeug ausgebildet, dass sie zur Erfassung von Objekten in einem rechts vom Fahrzeug ausgebildeten Totwinkelbereich 4 ausgebildet ist. Der beispielhaft und schematisch dargestellte Flächenbereich des Totwinkelbereichs 4 wird durch die Infrarotsignale der einzelnen Sensoren der Sensoreinheit 3 abgedeckt. Die einzelnen Sensoren der Sensoreinheit 3 erzeugen alle Sensorsignale, die eine gleiche horizontale Winkelbreite b aufweisen. Die Signale der einzelnen Sensoren sind im Hinblick auf ihren Abstrahlwinkel zwischen der Hauptachse des Signals und der Fahrzeuglängsachse A unterschiedlich ausgebildet. Durch diese unterschiedlichen Abstrahlrichtungen der Signale der einzelnen Sensoren wird ein entsprechender zu überwachender Flächenbereich seitlich und hinter dem Fahrzeug abgedeckt. Aufgrund dieser Ausgestaltung der Sensoreinheit, bei denen alle Sensoren Signale 5 bis 20 mit gleicher horizontaler Winkelbreite aussenden, tritt jedoch die Problematik auf, dass zum einen bei relativ weit vorne und weit seitlich zum Fahrzeug 1 sich im Totwinkelbereich befindenden Objekten eine relativ hohe Anzahl an dem Objekt reflektierte und von der Sensoreinheit 3 empfangene Signale auftritt, wodurch die zu verarbeitende Datenmenge sehr groß ist. Eine derartige Vielzahl von Informationen ist im Hinblick auf die Objekterkennung nicht erforderlich. Andererseits ist jedoch bei Objekten, die relativ weit hinter dem Fahrzeug 1 sich befinden aufgrund der in diese Richtung ausgesendeten Sendesignale die Anzahl der reflektierten Signale relativ gering, so dass diesbezüglich gegebenenfalls eine zu geringe Informationsgewinnung für eine sichere Aussage, ob sich ein Objekt bzw. welches Objekt sich in dem Totwinkelbereich 4 befindet, gegeben werden kann. Darüber hinaus ist gerade bei diesen sich relativ weit hinter dem Fahrzeug 1 und relativ nah zur Längsachse A befindlichen Objekten bei dieser Ausgestaltung der Sendesignale auch das Problem gegeben, dass bei zwei relativ nah hintereinander sich befindlichen Objekten auch möglicherweise nicht mehr erkannt werden kann, ob es ein langes Objekt oder zwei separate kürzere Objekte sind.

In dem Patent US 6,452,534 B1 wird ein Verfahren zur Verbesserung eines Erfassungsbereichs eines Fahrzeugradarsystems vorgeschlagen.

Die WO 2006/035019 A1 offenbart einen Infrarotsensor zur Parklückenvermessung, der mindestens zwei Erfassungsgebiete aufweist.

Das Patent US 6,363,326 B1 zeigt ein Verfahren und eine Vorrichtung zur Totwinkelüberwachung für Kraftfahrzeuge. Diese Vorrichtung weist mehrere Sensoren auf.

In der EP 0 658 776 A1 ist eine Laserstrahleinrichtung für Kraftfahrzeuge offenbart, die einen vor dem Kraftfahrzeug liegenden Bereich in mehrere Untersuchungsbereiche aufteilt.

In der DE 10 2004 019 651 A1 wird ein Blindspot-Sensorsysystem zur Detektion und/oder Klassifikation von Objekten in einem definierten Überwachungsbereich eines Kraftfahrzeugs mittels Radar-Technik offenbart, umfassend wenigstens ein erstes Mittel zum Aussenden eines ersten Radarstrahls sowie ein zweites Mittel zum Aussenden eines zweiten Radarstrahls.

Es ist Aufgabe der vorliegenden Erfindung, ein Verfahren sowie ein Fahrerassistenzsystem zu schaffen, bei dem die Objekterkennung in einem Totwinkelbereich eines Fahrzeugs verbessert werden kann.

Diese Aufgabe wird durch ein Verfahren, welches die Merkmale nach Anspruch 1 aufweist, und ein Fahrerassistenzsystem, welches die Merkmale nach Anspruch 9 aufweist, gelöst.

Bei dem erfindungsgemäßen Verfahren zum Erfassen eines Objekts in einem Totwinkelbereich eines Fahrzeugs wird mit einer Sensoreinheit eine Mehrzahl von Detektionssignalen eines Signalpakets ausgesendet und an dem Objekt reflektierte und von einer Empfangseinheit empfangene Signale werden ausgewertet. Zumindest zwei Detektionssignale werden dazu mit unterschiedlicher horizontaler Winkelbereite ausgesendet. Dies bedeutet, dass ein erstes Detektionssignal mit einer ersten horizontalen Winkelbreite ausgesendet wird und zumindest ein zweites Detektionssignal mit einer im Vergleich zur ersten horizontalen Winkelbreite unterschiedlichen horizontalen Winkelbreite ausgesendet wird. Durch diese Variation der horizontalen Winkelbreiten der unterschiedlichen Detektionssignale kann im Hinblick auf die Objekterkennung in unterschiedlichen Bereichen des Totwinkelfelds eine genauere Objekterkennung erfolgen. Durch diese Variation der horizontalen Winkelbreiten wird zum einen gerade bei relativ nahen und relativ weit seitlich im Totwinkelbereich zum Fahrzeug angeordneten Objekten die im Vergleich zum Stand der Technik hohe Datenmenge von Empfangssignalen reduziert, wobei auch mit dieser reduzierten Datenmenge eine Aussage über die Objekte mit gleicher Zuverlässigkeit und Sicherheit erfolgen kann. Darüber hinaus wird durch diese Variation der horizontalen Winkelbreite bei Objekten, die sich relativ weit hinter dem Fahrzeug befinden, eine Erhöhung der Datenmenge im Hinblick auf die empfangenen Informationen generiert, so dass diesbezüglich die Aussagegenauigkeit von erkannten Objekten gerade an diesen Positionen verbessert werden kann. Nicht zuletzt gewährleistet dies auch die Möglichkeit, dass bei relativ weit sich hinter dem Fahrzeug befindenden Objekten, die darüber hinaus auch noch im Hinblick auf die seitliche Betrachtung nah zum Fahrzeug angeordnet sind, sich die Aussagewahrscheinlichkeit ob sich lediglich ein oder mehrere Objekte hinter dem Fahrzeug befinden, wesentlich präzisiert werden kann.

Erfindungsgemäß wird eine erste Gruppe von Detektionssignalen mit einer ersten horizontalen Winkelbreite und eine zweite Gruppe von Detektionssignalen mit einer zur ersten unterschiedlichen zweiten horizontalen Winkelbreite ausgesendet. Durch derartige Gruppenbildung wird erreicht, dass erfindungsgemäß bei jeder Gruppe mehrere Detektionssignale ausgesendet werden und dadurch auch die Genauigkeit und Präzision der Objekterfassung verbessert wird.

Erfindungsgemäß ist vorgesehen, dass jede Gruppe zumindest zwei Detektionssignale umfasst, die ausgesendet werden und die Detektionssignale einer Gruppe mit der gleichen horizontalen Winkelbreite ausgesendet werden. Es wird also innerhalb der Gruppe eine Aussendung von mehreren Detektionssignalen durchgeführt, die allesamt mit der gleichen Winkelbreite in horizontaler Richtung betrachtet erzeugt werden. Auch dadurch kann im Hinblick auf die Objekterfassung an unterschiedlichen Stellen des Totwinkelbereichs dies individuell präzisiert werden und gerade kritische örtliche Stellen im Totwinkelbereich im Hinblick auf die Objekterfassung präzisiert werden.

Es kann vorgesehen sein, dass die Sensoreinheit eine Mehrzahl von ortsfesten unmittelbar nebeneinander angeordneten einzelnen Sensoren aufweist. Diese können ihre Detektionssignale gleichzeitig oder auch in zeitlich aufeinander folgender Weise aussenden. Werden sie zeitlich nacheinander ausgesendet, so ist vorzugsweise vorgesehen, dass dies mit einer Frequenz zwischen 12 Hz und 100 Hz erfolgt. Ein Signalpaket umfasst diesbezüglich alle gleichzeitig oder zeitlich nacheinander ausgesendeten Detektionssignale der Sensoreinheit, bei jeweils einmaliger Aussendung.

Vorzugsweise ist vorgesehen, dass die Sensoreinheit mehr als 5, insbesondere mehr als 10, insbesondere 16 Sensoren aufweist. Diese erzeugen jeweils ein Detektionssignal während eines Messzyklus, so dass sich bei einer derartigen Ausgestaltung ein Signalpaket aus 16 Detektionssignalen ergibt. In einem nachfolgenden zweiten Signalpaket werden dann wiederum jeweils ein Detektionssignal jedes Sensors ausgesendet usw.

Werden die Detektionssignale eines Signalpakets seitlich nacheinander von den jeweiligen Sensoren ausgesendet, so ist vorzugsweise vorgesehen, dass die Aussendung des Sendesignals mit dem Sensor beginnt, der das Sendesignal mit dem kleinsten Winkel gegenüber der Längsachse des Fahrzeugs aussendet. Diesbezüglich ist insbesondere auch vorgesehen, dass die Gruppe von Detektionssignalen zuerst ausgesendet wird, die die kleinsten horizontalen Winkelbreiten aufweisen.

Vorzugsweise ist vorgesehen, dass das Detektionssignal der zweiten Gruppe mit einer mindestens um 50 Prozent, insbesondere mindestens 90 Prozent, vorzugsweise zwischen 95 und 105 Prozent, insbesondere 100 Prozent, größeren horizontalen Winkelbreite als das Detektionssignal der ersten Gruppe ausgesendet wird. Diesbezüglich werden die horizontalen Winkelbreiten daher um einen sich wesentlich unterscheidenden Breitenwert ausgesendet. Dies trägt den vorab genannten Vorteilen besonders Rechnung.

Insbesondere wird vorgesehen, dass ein Detektionssignal der ersten Gruppe mit einer horizontalen Winkelbreite zwischen 1° und 2°, insbesondere zwischen 1 ° und 1,5°, ausgesendet wird. Besonders vorteilhaft ist in diesem Zusammenhang eine horizontale Winkelbreite von 1,25°. Durch derartig kleine bzw. horizontal betrachtet sehr schmale Sendesignale kann gerade die Detektion von Objekten relativ weit hinter einem Fahrzeug und im Hinblick auf die seitliche Position relativ nah zum Fahrzeug angeordneter Objekte einer größeren Menge von reflektierten Signalen, die dann als Empfangssignale empfangen werden, erzeugt werden. Dadurch kann die Datenmenge bei gerade derartigen Objekten an diesen spezifischen Positionen relativ zum Fahrzeug verbessert werden, wobei auch somit die Aussagepräzision bezüglich der Objekterkennung wesentlich verbessert werden kann. Insbesondere wird dadurch jedoch auch gewährleistet, dass wesentlich exakter erkannt werden kann, ob sich in diesen spezifischen örtlichen Stellen im Totwinkelbereich hinter dem Fahrzeug ein oder mehrere Objekte befinden. Die diesbezügliche Auflösungswahrscheinlichkeit mit den gewonnen Informationen ist wesentlich präzisiert.

Vorzugsweise wird eine dritte Gruppe von Detektionssignalen mit einer horizontalen Winkelbreite größer der ersten und größer der zweiten Gruppe ausgesendet. Durch eine derartige weitere Spezifizierung und Aufteilung der Detektionssignale einer Sensoreinheit kann die Objekterkennung nochmals verbessert werden. Eine derartige Aufweitung der horizontalen Winkelbreite in der dritten Gruppe der Detektionssignale ist besonders vorteilhaft im Hinblick auf die relativ seitliche Abstrahlung dieser Detektionssignale, so dass diese Detektionssignale vorzugsweise mit einem relativ großen Winkel bezüglich ihrer Hauptabstrahlachse zur Fahrzeuglängsachse ausgesendet werden. In dem diese quasi sehr weit seitlich zum Fahrzeug ausgesendeten Detektionssignale mit einer deutlich vergrößerten Winkelbreite abgestrahlt werden, kann die Anzahl der reflektierten Signale, die dann auch empfangen werden reduziert werden, so dass bei Objekten in diesen örtlichen Gebieten des Totwinkelbereichs die gewonnene Informationsmenge von erhaltenen Empfangssignalen reduziert werden kann, jedoch dennoch die Aussagewahrscheinlichkeit einer Objekterkennung nicht beeinträchtigt wird.

Es kann vorgesehen sein, dass die dritte Gruppe abhängig von der Ausgestaltung der Sensoreinheit gleichzeitig mit der ersten und/oder der zweiten Gruppe ausgesendet wird. Es kann auch vorgesehen sein, dass die Detektionssignale der dritten Gruppe seitlich unterschiedlich zu denen der ersten und/oder der zweiten Gruppe ausgesendet werden. Insbesondere ist dann bei einem derartig zeitlich versetzten Aussenden vorzugsweise vorgesehen, dass die dritte Gruppe zeitlich nach der ersten und nach der zweiten Gruppe ausgesendet wird. Auch hier kann diesbezüglich eine Taktfrequenz zwischen 12 Hz und 100 Hz für das gesamte Signalpaket vorzugsweise vorgesehen sein.

Insbesondere wird ein Detektionssignal der dritten Gruppe mit einer um mindestens 300 Prozent größeren, insbesondere zwischen 350 Prozent und 400 Prozent größeren horizontalen Winkelbreite als die Winkelbreite der ersten Gruppe ausgesendet. Auch diesbezüglich ist eine um ein Vielfaches größere horizontale Winkelbreite vorgesehen, was im Hinblick auf die Objekterfassung in Verbindung mit einer Datenreduzierung, die bezüglich der Objekterkennung auszuwerten ist, deutlich reduziert wird.

Vorzugsweise wird auch von der dritten Gruppe eine Anzahl größer 1 von Detektionssignalen, insbesondere vier Detektionssignale ausgesendet. Besonders vorteilhaft ist vorgesehen, wenn die Anzahl der Detektionssignale der dritten Gruppe kleiner der Anzahl der Detektionssignale der ersten und/oder kleiner der Anzahl der zweiten Gruppe vorgegeben wird. Insbesondere wird vorgesehen, dass von der ersten und der zweiten Gruppe jeweils eine gleiche Anzahl größer 1, insbesondere 6, von Detektionssignalen ausgesendet wird. Gerade eine derartige Aufteilung von Detektionssignalen insbesondere in Verbindung mit den spezifischen Winkelbreiten bietet eine besonders optimierte Ausgestaltung im Hinblick auf eine präzise Objekterfassung in allen Gebieten des Totwinkelbereichs, wobei darüber hinaus die Objekterfassung mit gebietabhängig angepassten und geeignetsten Datenmengen generiert wird.

Erfindungsgemäß ist vorgesehen, dass ein Detektionssignal mit einer kleineren horizontalen Winkelbreite in einem kleineren Winkel zur Fahrzeuglängsachse ausgesendet wird als eine Detektionssignal mit einer größeren horizontalen Winkelbreite. Insbesondere wird vorgesehen, dass die horizontale Winkelbreite der Sendesignale mit zunehmendem Winkel zwischen der Fahrzeuglängsachse und der Hauptachse eines horizontalen Winkelbereichs eines Sendesignals zunimmt. Dies gilt für unterschiedliche Gruppen, so dass erfindungsgemäß die Detektionssignale einer Gruppe mit gleicher horizontaler Winkelbreite ausgesendet werden, obwohl sie unterschiedliche Winkel zur Fahrzeuglängsachse aufweisen.

Vorzugsweise sind daher die Detektionssignale der ersten Gruppe im Hinblick auf ihre Winkelorientierung zur Fahrzeuglängsachse näher dazu orientiert als die Detektionssignale der zweiten Gruppe und der dritten Gruppe.

Bei einem erfindungsgemäßen Fahrerassistenzsystem zur Erfassung eines Objekts in einem Totwinkelbereich eines Fahrzeugs weist dieses System zumindest eine Sensoreinheit auf, welche zur Erzeugung einer Mehrzahl von Detektionssignalen eines Signalpakets ausgebildet ist. Das Fahrerassistenzsystem umfasst darüber hinaus eine Empfangseinheit, welche zur Auswertung von an dem Objekt reflektierten empfangenen Signalen ausgebildet ist. Zumindest zwei ausgesendete Detektionssignale weisen im Vergleich miteinander unterschiedliche horizontale Winkelbreiten auf.

Erfindungsgemäß ist vorgesehen, dass ein Detektionssignal mit einer kleineren horizontalen Winkelbreite in einem kleineren Abstandswinkel in Fahrzeugslängsachse ausgesendet ist als ein Detektionssignal mit einer größeren horizontalen Winkelbreite.

Erfindungsgemäß wird eine erste Gruppe von Detektionssignalen mit einer ersten horizontalen Winkelbreite und eine zweite Gruppe von Detektionssignalen mit einer zur ersten unterschiedlichen zweiten horizontalen Winkelbreite ausgesendet. Jede Gruppe umfasst zumindest zwei Detektionssignale und die Detektionssignale einer Gruppe werden mit der gleichen horizontalen Winkelbreite ausgesendet.

Vorteilhafte Ausgestaltungen des erfindungsgemäßen Verfahrens sind als vorteilhafte Ausgestaltungen des erfindungsgemäßen Fahrerassistenzsystems anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in deren Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Draufsicht auf ein Fahrzeug mit einer Fahrerassistenzeinrichtung zum Erfassen von Objekten im Totwinkelbereich, wie es aus dem Stand der Technik bekannt ist;
- Fig. 2: eine schematische Draufsicht auf ein Fahrzeug mit einem Ausführungsbeispiel eines erfindungsgemäßen Fahrerassistenzsystems;
- Fig. 3: ein schematisches Diagramm bei dem ein Objekt in einer ersten Position relativ zum Fahrzeug gezeigt ist;
- Fig. 4: ein Diagramm, bei dem das Objekt in einer zweiten Position relativ zum Fahrzeug gezeigt ist;
- Fig. 5: eine Darstellung einer Objekterfassung mit einem Detektionssignal mit kleinster horizontaler Winkelbreite im Vergleich zu den anderen Sendesignalen des Ausführungsbeispiels; und
- Fig. 6: eine Detektion eines von mehreren dicht hintereinander befindlichen Objekten mit einem Detektionssignal gemäß Fig. 5.

In den Figuren werden gleiche oder funktionsgleiche Elemente mit den gleichen Bezugszeichen versehen.

In Fig. 2 ist in einer schematischen Draufsicht ein Fahrzeug 21 gezeigt, welches ein Personenkraftwagen ist. Das Fahrzeug 21 bewegt sich gemäß der Pfeildarstellung P1. Das Fahrzeug 21 umfasst ein Fahrerassistenzsystem 22, welches zur Erfassung von Objekten in einem Totwinkelbereich 25 das Fahrzeug 21 ausgebildet ist. Das Fahrerassistenzsystem 22 weist eine erste Sensoreinheit 23 auf, die an der rechten Seite des Fahrzeugs 21 angeordnet ist und welche zur Erfassung eines Totwinkelbereichs 25 ausgebildet ist. An der gegenüber liegenden linken Seite des Fahrzeugs 21 ist ebenfalls eine weitere Sensoreinheit 26 angeordnet, welche zum Erfassen von Objekten in einem nicht dargestellten Totwinkelbereich auf der linken Seite des Fahrzeugs 21 ausgebildet ist.

Darüber hinaus umfasst das Fahrerassistenzsystem 22 eine Steuer- und Auswerteeinheit 24, welche zur Auswertung der von den Sensoreinheiten 23 und 26 detektierten Signalen ausgebildet ist.

Die Sensoreinheit 23 ist im Ausführungsbeispiel ein Sensor-Array mit einer Mehrzahl von einzelnen Infrarotsensoren. Im Ausführungsbeispiel ist vorgesehen, dass diesbezüglich 16 separate Infrarotsensoren vorgesehen sind, wobei die Anzahl diesbezüglich beispielhaft ist. Jede dieser einzelnen Sensoren der Sensoreinheit 23 ist zur Erzeugung eines Infrarotsignals als Detektionssignal ausgebildet. Dazu ist vorgesehen, dass Sensoren der Sensoreinheit 23 Detektionssignale einer ersten Gruppe 27 aussenden. Im Ausführungsbeispiel sind diesbezüglich sechs Sensoren vorgesehen, die jeweils ein Deteketionssignal 28, 29, 30, 31, 32 und 33 aussenden. Diese Detektionssignale 28 bis 33 sind die quasi am nächsten zum Fahrzeug 21 nach hinten abgestrahlten Detektionssignale. Dies bedeutet, dass sie möglichst fahrzeugnah und weit nach hinten ausgesendet werden. Diesbezüglich ist somit vorgesehen, dass diese Detektionssignale 28 bis 33 der ersten Gruppe 27 mit kleineren Winkeln ihrer Hauptabstrahlrichtung zur zum Fahrzeugrand hin verschobenen Achse A' der Fahrzeuglängsachse A orientiert sind. Beispielhaft ist der Winkel α eingezeichnet, welcher den Winkel zwischen der Achse A' und der Hauptrichtung des Detektionssignals 28 bezeichnet.

Darüber hinaus wird durch weitere Sensoren der Sensoreinheit 23 eine zweite Gruppe 34 von Detektionssignalen ausgesendet. Im Ausführungsbeispiel ist vorgesehen, dass diesbezüglich ebenfalls von sechs Sensoren Detektionssignale 35, 36, 37, 38, 39 und 40 ausgesendet werden. Die einzelnen Detektionssignale 35 bis 40 der zweiten Gruppe 34 weisen jeweils größere Winkel zu der Achse A' auf als die Detektionssignale 28 bis 33 der ersten Gruppe 27. Beispielhaft ist hier der Winkel β eingezeichnet, welcher den Winkel zwischen der Achse A' und der Hauptrichtung des Detektionssignals 35 bezeichnet, und welcher größer als der Winkel α sowie die nicht eingezeichneten jeweiligen Winkel zwischen den Detektionssignalen 29 bis 33 und der Achse A1' ist.

Darüber hinaus wird eine dritte Gruppe 41 von Detektionssignalen ausgesendet. Die dritte Gruppe 41 umfasst im Ausführungsbeispiel vier Detektionssignale 42, 43, 44 und 45. Die Anzahl der Detektionssignale 42 bis 45 der dritten Gruppe 41 ist daher geringer als die Anzahl der Detektionssignale 28 bis 33 der ersten Gruppe 27 und auch der Detektionssignale 35 bis 40 der zweiten Gruppe 34. Beispielhaft ist der Winkel µ eingezeichnet, welcher den Winkel zwischen der Achse A' und der Hauptrichtung des Detektionssignals 42 bezeichnet. Der Winkel µ ist größer als die Winkel α und β.

Die Detektionssignale aller drei Gruppen 27, 34 und 41 sind im Hinblick auf ihre Abstrahlrichtung so nebeneinander ausgebildet bzw. fächerartig aufgebaut, dass sie einen Gesamtbereich von etwa 40° im Hinblick auf die Winkelaufweitung abdecken.

Die vier Detektionssignale 42 bis 45 der dritten Gruppe 41 werden mit größeren Winkeln ihrer Hauptabstrahlrichtung zur Achse A' ausgesendet als die Detektionssignale der ersten Gruppe 27 und der zweiten Gruppe 34. Ausgehend von den Detektionssignalen 28 bis 33 der ersten Gruppe 27 werden die Detektionssignale 35 bis 40 der zweiten Gruppe 34 somit weiter seitlich nach außen in Bezug zum Fahrzeug 21 schräg nach hinten ausgesendet. Demgegenüber werden die Detektionssignale 42 bis 45 der dritten Gruppe 41 noch weiter seitlich schräg nach außen gerichtet im Bezug zum Fahrzeug 21 im Vergleich zu den Detektionssignalen der ersten Gruppe 27 und der zweiten Gruppe 34 ausgesendet.

Die horizontalen Winkelbreiten b1 der Detektionssignale der ersten Gruppe 27 sind unterschiedlich zur horizontalen Winkelbreite b2 der Detektionssignale der zweiten Gruppe 34 und auch unterschiedlich zur horizontalen Winkelbreite b3 der Detektionssignale der dritten Gruppe 41.

Im Ausführungsbeispiel ist vorgesehen, dass die Detektionssignale 28 bis 33 der ersten Gruppe 27 alle eine gleiche horizontale Winkelbreite b1 aufweisen. Eine horizontale Winkelbreite ist dabei dahingehend zu verstehen, dass sie den Winkel zwischen den zwei Signalbegrenzungen eines Detektionssignals 28 bis 33 darstellt. Im Hinblick auf eine horizontale Winkelbreite ist dabei die Signalkeulenweite zu verstehen, die sich in der Figurenebene und somit in der x-, y-Ebene ausbildet.

Im Ausführungsbeispiel ist vorgesehen, dass diese horizontale Winkelbreite b1 1,25° beträgt. Demgegenüber sind die Detektionssignale 35 bis 40 der zweiten Gruppe 34 mit einer im Vergleich zur horizontalen Winkelbreite b1 größeren horizontalen Winkelbreite b2 erzeugt. Auch hier sind alle Detektionssignale 35 bis 40 der zweiten Gruppe 34 mit dieser horizontalen Winkelbreite b2 abgestrahlt. Im Ausführungsbeispiel beträgt diese horizontale Winkelbreite b2 2,5°.

Die Detektionssignale 42 bis 45 der dritten Gruppe 41 sind demgegenüber mit einer dritten horizontalen Winkelbreite b3 erzeugt. Auch hier sind alle Detektionssignale 42 bis 45 mit dieser gleichen horizontalen Winkelbreite b3 erzeugt. Die horizontale Winkelbreite b3 beträgt im Ausführungsbeispiel 4,4°.

Die horizontalen Winkelbreiten b1, b2, b3 sind allesamt unterschiedlich zu der horizontalen Winkelbreite b im Stand der Technik, welche 3° beträgt.

In analoger Ausgestaltung ist die Sensoreinheit 26 auf der linken Seite des Fahrzeugs 21 ausgebildet. Es kann vorgesehen sein, dass die Detektionssignale der drei Gruppen 27, 34 und 41 im wesentlichen gleichzeitig ausgesendet werden. Es kann jedoch auch vorgesehen sein, dass die Sensoreinheit 23 derartig ausgebildet ist; dass die Detektionssignale der ersten Gruppe 27 beispielsweise zeitlich vor den Detektionssignalen der zweiten Gruppe 34 und vor der dritten Gruppen 41 ausgesendet werden. Diesbezüglich kann dann auch vorgesehen sein, dass die Detektionssignale 28 bis 33 der ersten Gruppe 27 gleichzeitig ausgesendet werden. Ebenso kann vorgesehen sein, dass auch dann, wenn die Detektionssignale 28 bis 33 der ersten Gruppe 27 zeitlich vor denen der Gruppe 34 und der Gruppe 41 ausgesendet werden, auch diese Detektionssignale 28 bis 33 zeitlich nacheinander ausgesendet werden, wobei vorzugsweise dann zunächst das erste Detektionssignal 28 und in weiterer zeitlicher Reihenfolge dann die Detektionssignale 29 bis 33 folgend ausgesendet werden.

Im Hinblick auf die Erzeugung der unterschiedlichen horizontalen Winkelbreiten b1, b2 und b3 können die jeweiligen Sensoren durch individuelle optischen Elemente vor einer Fotodiode entsprechend ausgerüstet werden, um die diesbezügliche Orientierung und Abstrahlcharakteristik erzielen zu können.

Jeder der Sensoren der Sensoreinheit 23 umfasst darüber hinaus vorzugsweise eine Empfangseinheit, mittels welcher die an dem Erfassungsbereich der detektierten Objekten reflektierten Sendesignale empfangen werden.

Durch die Ausgestaltung der Sensoreinheit 23 gemäß der Darstellung in Fig. 2 mit den mehreren Detektionssignalen und deren unterschiedlicher horizontaler Winkelbreite sowie insbesondere auch im Hinblick auf deren Orientierung zur Fahrzeuglängsachse A bzw. A' kann sowohl die Detektion von Objekten relativ nahe zur Fahrzeuglängsachse A bzw. A' und relativ weiter hinter dem Fahrzeug 21 präzise und mit ausreichendem Datenmaterial erkannt werden. Ebenso ist es möglich, dass Objekte relativ nah hinter dem Fahrzeug 21 und mit relativ großem Abstand zur Fahrzeuglängsachse A bzw. A' präzise und sicher detektiert werden, wobei dies mit einem im Vergleich zum Stand der Technik reduzierten Datenaufwand erfolgen kann. Dies, da aufgrund der vergrößerten horizontalen Winkelbreite b3 nicht mehr so viele Detektionssignale an einem entsprechenden Objekt reflektiert werden und daher die Anzahl der Empfangssignale im Vergleich zum Stand der Technik reduziert ist. Dadurch ergibt sich ein geringerer Aufwand an auszuwertenden Dateninformationen.

Im Hinblick auf die Ausführung in Fig. 2 kann somit gesagt werden, dass die schmäleren Detektionssignale länger am Fahrzeug 21 und weiter nach hinten detektieren und mit zunehmendem seitlichen Abstand der Detektionssignale zum Fahrzeug 21 und mehr nach außen gerichteter seitlicher Detektion die horizontale Breite zunimmt.

Im Hinblick auf die in Fig. 2 gezeigten gegenüber liegenden Sensoreinheiten 23 und 26 können diese baugleich sein. Um die entsprechende Signalerzeugung und Auffächerung in den entsprechenden Winkelbreiten gewährleisten zu können, kann dann vorgesehen sein, dass die Sensoreinheit 26 in umgedrehter Anordnung an der linken Seite des Fahrzeugs 21 angeordnet ist.

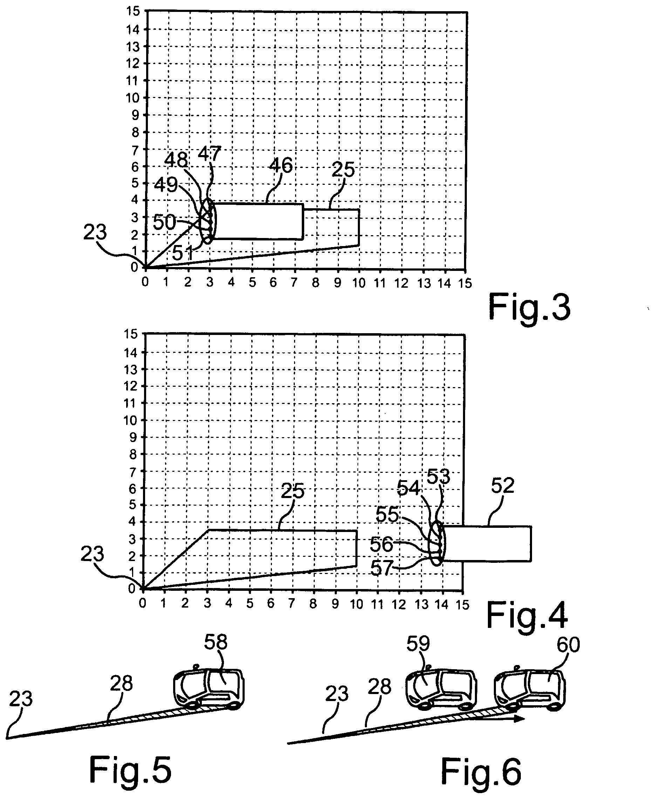

In Fig. 3 ist ein schematisches Diagramm gezeigt, bei dem die Sensoreinheit 23 im Nullpunkt angeordnet ist. Die horizontale Achse gibt dabei den Abstand nach hinten an, wobei die vertikale Achse den Abstand seitlich zu dieser Sensoreinheit 23 darstellt. In der Darstellung gemäß Fig. 3 ist ein Objekt 46 in dem Totwinkelbereich 25, wobei es sich diesbezüglich relativ weit vorne und relativ weit seitlich in Bezug zum Fahrzeug 21 und somit auch zur Sensoreinheit 23 befindet. Wie zu erkennen ist, werden im Hinblick auf die Detektion des Objekts 46, welches ein Fahrzeug darstellt, fünf reflektierte und empfangene Signale 47, 48, 49, 50 und 51 generiert, die beispielsweise von einer Reflektion an einem frontseitigen Stoßfänger des Fahrzeugs bzw. des Objekts 46 stammen. Die Anzahl der empfangenen Signale 47 bis 51 ist lediglich beispielhaft, sie ist jedoch im Vergleich zum Stand der Technik reduziert, bei dem gemäß der Darstellung in Fig. 1 und Übertragung der Situation in Fig. 3 auf dieses System in Fig. 1 eine deutlich höhere Anzahl an empfangenen Signalen erfolgen würde. Dadurch ist die Datenmenge, die in Fig. 1 ausgewertet werden muss, deutlich höher und die Aussagepräzision gerade bei diesen spezifischen Positionen relativ weit seitlich und relativ weit vorne im Hinblick auf das Fahrzeug 21 nicht verbessert.

Im Hinblick auf die beispielhafte Anzahl von 16 Detektionssignalen in drei Gruppen gemäß der Darstellung in Fig. 2 ist dies lediglich beispielhaft. Es können auch mehr oder weniger Detektionssignale und auch mehr oder weniger Gruppen vorgesehen sein. Im Hinblick auf die im Stand der Technik gemäß Fig. 1 gegenwärtig ebenfalls verwendete Anzahl von 16 Detektionssignalen ist mit der Erfindung bei gleichbleibender Anzahl von Detektionssignalen die Detektierbarkeit von Objekten in unterschiedlichen Positionen bezüglich des Totwinkelbereichs eines Fahrzeugs wesentlich verbessert und präzisiert und im Hinblick auf die örtliche Position des zu detektierenden Objekts mit angepasster und ausreichender auszuwertender Datenmenge möglich.

Besonders vorteilhaft ist diese Ausführung mit der entsprechen Anzahl an Detektionssignalen, deren Orientierung und eines für einen Personenkraftwagen gemäß dem Fahrzeug 21 üblichen Totwinkelbereich 25 eine bestmögliche Detektierung von weiteren entsprechenden Fahrzeugen gewährleistet. Dies im Hinblick auf die üblichen Breiten im Bereich von 2 m von zu detektierenden Fahrzeugen als Objekte die diesbezüglich auch entsprechende Totwinkelbereiche aufweisen, wie sie in den Figuren dargestellt sind.

In Fig. 4 ist ein weiteres Diagramm gezeigt, bei dem ebenfalls die Sensoreinheit 23 im Nullpunkt angeordnet ist. Der Totwinkelbereich 25 ist analog zur Darstellung in Fig. 3. Diesbezüglich ist ein Objekt 53 noch relativ weit hinter dem Fahrzeug 21 und somit auch weit hinter der Sensoreinheit 23, wobei diesbezüglich ein Abstand von 14 m ausgebildet ist. Die Sensoren der Sensoreinheit 23 erzeugen diesbezüglich auch Detektionssignale 28 bis 33 also auch Detektionssignale 35 bis 40 als auch Detektionssignale 42 bis 45, die über den Totwinkelbereich 25 hinausreichen und entsprechend detektieren können. Dies ist gerade bei Objekten 52, wie sie in Fig. 4 gezeigt sind, die relativ weit hinter dem Fahrzeug 21 aber relativ nah zur Fahrzeuglängsachse A angeordnet sind, vorteilhaft. Eine Detektion des Objekts 52 ist daher auch bereits dann möglich, wenn es nach außerhalb des Totwinkelbereichs 25 ist. Dies ist auch aus dem Grund erforderlich, da bezüglich der Signalaussendung, der Signallaufzeit, der empfangenen Signale und der diesbezüglichen Auswertung eine Zeitdauer vergeht, während der das Objekte 52 in den Totwinkelbereich 25 eintritt. Dies bedeutet, dass aufgrund dieser Gegebenheiten eine derartige frühzeitige Detektion erforderlich ist, um dann, wenn das Objekt 52 tatsächlich in den Totwinkelbereich 25 eintritt, auch eine entsprechende Aussage diesbezüglich machen zu können. Im Hinblick auf die zu Fig. 2 und Fig. 3 genannten spezifischen horizontalen Winkelbreiten b1, b2, b3 ist dies dahingehend vorteilhaft, da bei üblichen Fahrzeugbreiten schon etwa 1,8 m von zu detektierenden Objekten diese bei einem Abstand von etwa 15 m zur Sensoreinheit 23 entsprechend detektiert werden. So weisen die Detektionssignale 28 bis 33 mit ihrer beispielhaften horizontalen Winkelbreite b1 im Abstand von 15 m eine horizontale Signalbreite von 0,32 m auf. Dadurch können, wie dies auch in Fig. 4 dargestellt ist, fünf Detektionssignale das Objekt 52 detektieren und entsprechende reflektierte Signale 53 bis 57 dann wieder empfangen werden.

Im Vergleich zum Stand der Technik, bei dem bei einer derartigen Ausgestaltung lediglich zwei Signale reflektiert werden und somit eine zu geringe Datenmenge im Hinblick auf eine präzise Objekterkennung erzeugt werden, kann somit bei derartig relativ weit hinten und nah zum Fahrzeug 21 in seitlicher Richtung betrachtet angeordneten Objekten 52 durch die Erfindung eine größere Datenmenge im Hinblick auf die Aussage der Objekterkennung generiert werden.

Diesbezüglich sind die reflektierten Signale 53, 54, 55, 56 und 57 gezeigt. Im Hinblick auf die Darstellung in Fig. 4 und die rechtzeitige Erkennung des Objekts 52 beim Eintritt in den Totwinkelbereich 25 sind beispielsweise Relativgeschwindigkeiten zwischen dem Objekt 52 und dem Fahrzeug 21 von 50 km/h betrachtet, wobei eine Reaktionszeit des Fahrerassistenzsystems 22 bezüglich der Aussendung der Detektionssignale, deren Empfang und deren Verarbeitung beispielhaft 300 ms beträgt. Auf Grundlage dieser beispielhaften Werte ist die Darstellung in Fig. 4 zu sehen, bei der es daher einer Detektion bereits 4,2 m hinter dem Ende (bei 10 m) des Totwinkelbereichs 25 bedarf. Selbstverständlich ist diesbezüglich im Hinblick auf die Systemauslegung und die Relativgeschwindigkeiten zwischen einem Objekt und dem Fahrzeug 21 auch eine unterschiedliche Ausgestaltung und Terminierung möglich.

In Fig. 5 ist in einer weiteren beispielhaften Darstellung das Detektionssignal 28 gezeigt, welches seitlich auf ein Objekt 58 trifft. Durch diesen schmalen horizontalen Querschnitt des Detektionssignals 28 wird eine genauere seitliche Detektion des Objekts 58 geschaffen. Ungenauigkeiten durch eine zu breites und möglicherweise über die Länge des Objekts 58 nach vorne und hinten überstehendes Detektionssignal 28 können verhindert werden, so dass auch diesbezüglich Ungenauigkeiten in der Objekterfassung im Vergleich zum Stand der Technik vermieden werden können.

In Fig. 6 ist in einem weiteren Beispiel das Detektionssignal 28 gezeigt, welches aufgrund seiner geringen horizontalen Winkelbreite auch relativ exakt eines von zwei relativ nah hinereinander sich bewegenden Objekten detektieren kann. Aufgrund der sehr schmalen horizontalen Aufweitung des Detektionssignals 28 kann im Vergleich zum Stand der Technik genau festgestellt werden, dass die Reflektion von dem Objekt 60, welches ein Fahrzeug darstellt, keine Signalauftreffung auf das vordere Objekt 50 erfolgt. Bei einer Ausgestaltung gemäß Fig. 1 im Stand der Technik wäre eine derartige Detektion nicht möglich, da aufgrund der großen horizontalen Breite der fahrzeugnahen Detektionssignale 5 ein Auftreffen des Signals auf dem Objekt 59 und dem Objekt 60 erfolgen würde und diesbezüglich ein einziges langes Objekt erfasst werden würde.

## Patentansprüche

1. Verfahren zum Erfassen eines Objekts (46, 52, 58 bis 60) in einem Totwinkelbereich (25) eines Fahrzeugs (21), bei welchem mit einer Sensoreinheit (23, 26) eine Mehrzahl von Detektionssignalen (28 bis 45) eines Signalpakets ausgesendet und gegebenenfalls an dem Objekt (46, 52, 58 bis 60) reflektierte und von der Sensoreinheit (23, 26) empfangene Signale ausgewertet werden,
wobei eine erste Gruppe (27) von Detektionssignalen (28 bis 33) mit einer ersten horizontalen Winkelbreite (b1) und eine zweite Gruppe (34) von Detektionssignalen (35 bis 40) mit einer zur ersten unterschiedlichen zweiten horizontalen Winkelbreite (b2) ausgesendet werden, wobei die erste Gruppe (27) von Detektionssignalen (28 bis 33) mit einer kleineren horizontalen Winkelbreite (b1) in einem kleineren Winkel (α) zur Fahrzeuglängsachse (A, A') ausgesendet wird als die zweite Gruppe (34) von Detektionssignalen (35 bis 40) mit einer größeren horizontalen Winkelbreite (b2), wobei die größere horizontale Winkelbreite (b2) größer ist als die besagte kleinere horizontale Winkelbreite (b1), wobei jede Gruppe (27, 34) zumindest zwei Detektionssignale (28 bis 40) umfasst und die Detektionssignale (28 bis 40) einer Gruppe (27, 34) mit der gleichen horizontalen Winkelbreite (b1, b2) ausgesendet werden,
**dadurch gekennzeichnet, dass**
die Detektionssignale (28 bis 40) einer Gruppe (27, 34) unterschiedliche Winkel (α) zur Fahrzeuglängsachse (A, A') aufweisen.

2. Verfahren nach Anspruch 1,
**dadurch gekennzeichnet, dass**
das Detektionssignal (35 bis 40) der zweiten Gruppe (34) mit einer mindestens um 50%, insbesondere mindestens 90%, vorzugsweise zwischen 95% und 105%, größeren horizontalen Winkelbreite (b2) als das Detektionssignal (28 bis 33) derersten Gruppe (27) ausgesendet wird.

3. Verfahren nach Anspruch 1 oder 2,
**dadurch gekennzeichnet, dass**
ein Detektionssignal (28 bis 33) der ersten Gruppe (27) mit einer horizontalen Winkelbreite (b1) zwischen 1°und 2° insbesondere zwischen 1°und 1,5°, ausgesendet wird.

4. Verfahren nach einem der Ansprüche 1 bis 3,
**dadurch gekennzeichnet, dass**
eine dritte Gruppe (41) von Detektionssignalen (42 bis 45) mit einer horizontalen Winkelbreite (b3) größer der horizontalen Winkelbreite (b1) der ersten Gruppe (27) und größer der horizontalen Winkelbreite (b2) der zweiten Gruppe (34) ausgesendet wird.

5. Verfahren nach Anspruch 4,
**dadurch gekennzeichnet, dass**
die dritte Gruppe (41) zeitlich nach der ersten (27) und der zweiten Gruppe (34) oder gleichzeitig mit der ersten (27) und/oder der zweiten Gruppe (34) ausgesendet wird.

6. Verfahren nach Anspruch 4 oder 5,
**dadurch gekennzeichnet, dass**
ein Detektionssignal (42 bis 45) der dritten Gruppe (41) mit einer um mindestens 300% größeren, insbesondere zwischen 350% und 400% größeren, horizontalen Winkelbreite (b3) als die horizontale Winkelbreite (b1) der ersten Gruppe (27) ausgesendet wird.

7. Verfahren nach einem der Ansprüche 4 bis 6,
**dadurch gekennzeichnet, dass**
von der dritten Gruppe (41) eine Anzahl größer 1 von Detektionssignalen (42 bis 45), insbesondere 4, und kleiner der Anzahl der ersten (27) und/oder der zweiten Gruppe (34) ausgesendet werden.

8. Verfahren nach einem der Ansprüche 1 bis 7,
**dadurch gekennzeichnet, dass**
von der ersten (27) und der zweiten Gruppe (34) jeweils eine gleiche Anzahl größer 1, insbesondere 6, von Detektionssignalen (28 bis 40) ausgesendet wird.

9. Fahrerassistenzsystem zur Erfassung eines Objekts (46, 52, 58 bis 60) in einem Totwinkelbereich (25) eines Fahrzeugs (21), welches eine Sensoreinheit (23, 26) aufweist, welche zur Erzeugung einer Mehrzahl von Detektionssignalen (28 bis 45) eines Signalpakets ausgebildet ist, und eine Auswerteeinheit (24) aufweist, welche zur Auswertung von an dem Objekt (46, 52, 58 bis 60) reflektierten empfangenen Signalen ausgebildet ist,
wobei eine erste Gruppe (27) von Detektionssignalen (28 bis 33) mit einer ersten horizontalen Winkelbreite (b1) und eine zweite Gruppe (34) von Detektionssignalen (35 bis 40) mit einer zur ersten unterschiedlichen zweiten horizontalen Winkelbreite (b2) ausgesendet werden, wobei
die erste Gruppe (27) von Detektionssignalen (28 bis 33) mit einer kleineren horizontalen Winkelbreite (b1) in einem kleineren Winkel (α) zur Fahrzeuglängsachse (A, A') ausgesendet wird als die zweite Gruppe (34) von Detektionssignalen (35 bis 40) mit einer größeren horizontalen Winkelbreite (b2), wobei die größere horizontale Winkelbreite (b2) größer ist als die besagte kleinere horizontale Winkelbreite (b1), wobei jede Gruppe (27, 34) zumindest zwei Detektionssignale (28 bis 40) umfasst und die Detektionssignale (28 bis 40) einer Gruppe (27, 34) mit der gleichen horizontalen Winkelbreite (b1, b2) ausgesendet werden,
**dadurch gekennzeichnet, dass**
die Detektionssignale (28 bis 45) einer Gruppe (27, 34) unterschiedliche Winkel (α) zur Fahrzeuglängsachse (A, A') aufweisen.

## Claims

1. Method for sensing an object (46, 52, 58 to 60) in a blind spot region (25) of a vehicle (21), in which a sensor unit (23, 26) is used to transmit a plurality of detection signals (28 to 45) of a signal packet and if need be to evaluate signals that are reflected at the object (46, 52, 58 to 60) and received by the sensor unit (23, 26),
wherein
a first group (27) of detection signals (28 to 33) is transmitted with a first horizontal angle width (b1) and a second group (34) of detection signals (35 to 40) is transmitted with a second horizontal angle width (b2), which is different from the first, wherein
the first group (27) of detection signals (28 to 33) with a smaller horizontal angle width (b1) is transmitted at a smaller angle (α) in relation to the vehicle longitudinal axis (A, A') than the second group (34) of detection signals (35 to 40) with a larger horizontal angle width (b2), the larger horizontal angle width (b2) being larger than said smaller horizontal angle width (b1), wherein each group (27, 34) comprises at least two detection signals (28 to 40) and the detection signals (28 to 40) of a group (27, 34) are transmitted with the same horizontal angle width (b1, b2),
**characterized in that**
the detection signals (28 to 40) of a group (27, 34) have different angles (α) in relation to the vehicle longitudinal axis (A, A').

2. Method according to Claim 1,
**characterized in that**
the detection signal (35 to 40) of the second group (34) is transmitted with a horizontal angle width (b2) that is larger by at least 50%, particularly at least 90%, preferably between 95% and 105%, than the detection signal (28 to 33) of the first group (27) .

3. Method according to Claim 1 or 2,
**characterized in that**
a detection signal (28 to 33) of the first group (27) is transmitted with a horizontal angle width (b1) of between 1° and 2°, particularly between 1° and 1.5°.

4. Method according to one of Claims 1 to 3,
**characterized in that**
a third group (41) of detection signals (42 to 45) is transmitted with a horizontal angle width (b3) larger than the horizontal angle width (b1) of the first group (27) and larger than the horizontal angle width (b2) of the second group (34).

5. Method according to Claim 4,
**characterized in that**
the third group (41) is transmitted at a time after the first (27) and the second (34) group or at the same time as the first (27) and/or the second (34) group.

6. Method according to Claim 4 or 5,
**characterized in that**
a detection signal (42 to 45) of the third group (41) is transmitted with a horizontal angle width (b3) that is larger by at least 300%, particularly larger by between 350% and 400%, than the horizontal angle width (b1) of the first group (27).

7. Method according to one of Claims 4 to 6,
**characterized in that**
the third group (41) transmits a number greater than one of detection signals (42 to 45), particularly four, and less than the number of the first (27) and/or the second (34) group.

8. Method according to one of Claims 1 to 7,
**characterized in that**
the first (27) and the second (34) group each transmit an identical number greater than one, particularly six, of detection signals (28 to 40).

9. Driver assistance system for sensing an object (46, 52, 58 to 60) in a blind spot region (25) of a vehicle (21) that has a sensor unit (23, 26), which is designed to produce a plurality of detection signals (28 to 45) of a signal packet, and has an evaluation unit (24), which is designed to evaluate received signals reflected at the object (46, 52, 58 to 60),
wherein
a first group (27) of detection signals (28 to 33) is transmitted with a first horizontal angle width (b1) and a second group (34) of detection signals (35 to 40) is transmitted with a second horizontal angle width (b2), which is different from the first, wherein
the first group (27) of detection signals (28 to 33) with a smaller horizontal angle width (b1) is transmitted at a smaller angle (α) in relation to the vehicle longitudinal axis (A, A') than the second group (34) of detection signals (35 to 40) with a larger horizontal angle width (b2), the larger horizontal angle width (b2) being larger than said smaller horizontal angle width (b1), wherein each group (27, 34) comprises at least two detection signals (28 to 40) and the detection signals (28 to 40) of a group (27, 34) are transmitted with the same horizontal angle width (b1, b2),
**characterized in that**
the detection signals (28 to 45) of a group (27, 34) have different angles (α) in relation to the vehicle longitudinal axis (A, A').

## Revendications

1. Procédé de détection d'un objet (46, 52, 58 à 60) dans une zone d'angle mort (25) d'un véhicule (21), dans lequel une pluralité de signaux de détection (28 à 45) d'un paquet de signaux peut être envoyée au moyen d'une unité de détection (23, 26) et dans lequel le cas échéant, les signaux réfléchis au niveau de l'objet (46, 52, 58 à 60) et reçus par l'unité de détection (23, 26) sont analysés ;
un premier groupe (27) de signaux de détection (28 à 33) étant envoyé avec une première largeur d'angle horizontale (b1) et un deuxième groupe (34) de signaux de détection (35 à 40) étant envoyé avec une deuxième largeur d'angle horizontale (b2) différente de la première ;
le premier groupe (27) de signaux de détection (28 à 33) étant envoyé avec une plus petite largeur d'angle horizontale (b1) dans un plus petit angle (α) par rapport à l'axe longitudinal du véhicule (A, A') que le deuxième groupe (34) de signaux de détection (35 à 40) avec une plus grande largeur d'angle horizontale (b2), la plus grande largeur d'angle horizontale (b2) étant supérieure à ladite plus petite largeur d'angle horizontale (b1), chacun des groupes (27, 34) comprenant au moins deux signaux de détection (28 à 40) et les signaux de détection (28 à 40) d'un groupe (27, 34) étant envoyés avec la même largeur d'angle horizontale (b1, b2),
**caractérisé en ce que**
les signaux de détection (28 à 40) d'un groupe (27, 34) ont des angles différents (α) par rapport à l'axe longitudinal du véhicule (A, A').

2. Procédé selon la revendication 1, **caractérisé en ce que** le signal de détection (35 à 40) du deuxième groupe (34) est envoyé avec une plus grande largeur d'angle horizontale (b2), d'au moins 50 %, notamment d'au moins 90 %, de préférence entre 95 % et 105 %, que le signal de détection (28 à 33) du premier groupe (27) .

3. Procédé selon la revendication 1 ou 2, **caractérisé en ce qu'**un signal de détection (28 à 33) du premier groupe (27) est envoyé avec une largeur d'angle horizontale (b1) comprise entre 1° et 2°, notamment entre 1° et 1,5°.

4. Procédé selon l'une quelconque des revendications 1 à 3, **caractérisé en ce qu'**un troisième groupe (41) de signaux de détection (42 à 45) est envoyé à une largeur d'angle horizontale (b3) supérieure à la largeur d'angle horizontale du premier groupe (27) et supérieure à la largeur d'angle horizontale (b2) du deuxième groupe (34).

5. Procédé selon la revendication 4, **caractérisé en ce que** le troisième groupe (41) est envoyé un certain temps après le premier (27) et le deuxième groupe (34) ou simultanément au premier (27) et/ou au deuxième groupe (34).

6. Procédé selon la revendication 4 ou 5, **caractérisé en ce qu'**un signal de détection (42 à 45) du troisième groupe (41) est envoyé avec une largeur d'angle horizontale (b3) supérieure d'au moins 300 %, notamment entre 350 % et 400 %, que la largeur d'angle horizontale du premier groupe (27).

7. Procédé selon l'une quelconque des revendications 4 à 6, **caractérisé en ce qu'**un nombre supérieur à 1 de signaux de détection (42 à 45), notamment 4, et inférieur au nombre du premier (27) et/ou du deuxième groupe (34) est envoyé par le troisième groupe (41).

8. Procédé selon l'une quelconque des revendications 1 à 7, **caractérisé en ce que** respectivement un nombre égal, supérieur à 1, notamment de 6, de signaux de détection (28 à 40) est envoyé par le premier (27) et le deuxième groupe (34).

9. Système d'assistance au conducteur servant à la détection d'un objet (46, 52, 58 à 60) dans une zone d'angle mort (25) d'un véhicule (21) comportant une unité de détection (23, 26) réalisée pour produire une pluralité de signaux de détection (28 à 45) d'un paquet de signaux et comportant une unité d'analyse (24) réalisée pour analyser les signaux reçus réfléchis au niveau de l'objet (46, 52, 58 à 60) ;
un premier groupe (27) de signaux de détection (28 à 33) étant envoyé avec une première largeur d'angle horizontale et un deuxième groupe (34) de signaux de détection (35 à 40) étant envoyé avec une deuxième largeur d'angle horizontale (b2) différente de la première ;
le premier groupe (27) de signaux de détection (28 à 33) étant envoyé avec une plus petite largeur d'angle horizontale dans un plus petit angle (α) par rapport à l'axe longitudinal du véhicule (A, A') que le deuxième groupe (34) de signaux de détection (35 à 40) avec une plus grande largeur d'angle horizontale (b2), la plus grande largeur d'angle horizontale (b2) étant supérieure à ladite plus petite largeur d'angle horizontale (b1), chacun des groupes (27, 34) comprenant au moins deux signaux de détection (28 à 40) et les signaux de détection (28 à 40) d'un groupe (27, 34) étant envoyés avec la même largeur d'angle horizontale (b1, b2),
**caractérisé en ce que**
les signaux de détection (28 à 45) d'un groupe (27, 34) ont des angles différents (α) par rapport à l'axe longitudinal du véhicule (A, A').
